(19) **Europäisches Patentamt**

**European Patent Office**

**Office européen des brevets**

(11) **EP 1 338 883 B1**

(12) **EUROPÄISCHE PATENTSCHRIFT**

(45) Veröffentlichungstag und Bekanntmachung des Hinweises auf die Patenterteilung:
**26.04.2006 Patentblatt 2006/17**

(51) Int Cl.:
***G01M 17/007*** (2006.01)

(21) Anmeldenummer: **02003939.2**

(22) Anmeldetag: **22.02.2002**

(54) **Verfahren zur Analyse von Streuungen der Ergebnisse von Crash-Vorgängen**

Procedure for analysing crash testing data dispersion

Procédé d'analyse de la dispersion des résultats d'essais de tamponnement

(84) Benannte Vertragsstaaten:
**AT BE CH CY DE DK ES FI FR GB GR IE IT LI LU MC NL PT SE TR**

(43) Veröffentlichungstag der Anmeldung:
**27.08.2003 Patentblatt 2003/35**

(73) Patentinhaber: **Fraunhofer-Gesellschaft zur Förderung der angewandten Forschung e.V. 80686 München (DE)**

(72) Erfinder:
  • **Thole, Clemens-August 53229 Bonn (DE)**
  • **Mei, Liquan 53229 Bonn (DE)**

(74) Vertreter: **Hilleringmann, Jochen et al Patentanwälte von Kreisler-Selting-Werner, Bahnhofsvorplatz 1 (Deichmannhaus) 50667 Köln (DE)**

(56) Entgegenhaltungen:
  **EP-A- 0 720 008            US-A- 6 035 728**

**Beschreibung**

Die Erfindung betrifft ein Verfahren zur Analyse von Streuungen der Ergebnisse von Crash-Vorgängen und insbesondere von Crash-Vorgängen bei Fahrzeugen oder Fahrzeugkomponenten. Allgemeiner ausgedrückt betrifft die Erfindung ein Verfahren zur Bestimmung der Abhängigkeit der Streuungen eines dynamischen Prozesses an zwei unterschiedlichen Orten und zu zwei unterschiedlichen Zeitpunkten.

Hintergrund

Crashvorgänge zeigen instabiles Verhalten. Wird das gleiche Modell mehrfach getestet, so unterscheiden sich die Ergebnisse unter Umständen substantiell. Eine von mehreren Ursachen ist unterschiedliches Beulverhalten von ebenen Flächen und geraden Stäben. Wird z. B. ein Stab an seinen beiden Enden einem Druck ausgesetzt, so biegt sich der Stab in der Mitte durch. Die Richtung der Biegung ist nicht bestimmt und wird sich von Test zu Test ändern.
Ziel einer Produktentwicklung sollte es sein, derartige Instabilitäten dann zu vermeiden, wenn sie die essentiellen Produkteigenschaften beeinflussen. Häufig liegt jedoch die Ursache von "Instabilitäten nicht an derjenigen Stelle des Produkts, an der durch die Instabilität eine potentielle Verschlechterung der Produkteigenschaften stattfindet. So hat z. B. eine Streuung der Eindringtiefe der Stirnwand in die Fahrgastzelle ihre Ursache in der Regel nicht in der Stirnwand selber, sondern kann eine Konsequenz des Beulverhaltens des Motorlängsträgers sein.

Inhalt der Erfindung

Der Erfindung liegt die Aufgabe zu Grunde, ein Verfahren anzugeben, mit dem sich die Ursache und Wirkung von Streuungen bei Crash- und anderen Umformvorgängen analysieren lässt.
Zur Lösung dieser Aufgabe wird mit der Erfindung ein Verfahren zur Analyse von Streuungen der Ergebnisse von Crash-Vorgängen vorgeschlagen, bei dem

- anhand eines Modells mehrere Crash-Vorgänge simuliert oder durchgeführt werden,
- am Modell Ortspunkte definiert werden, deren Position zu bestimmten Zeitpunkten nach dem Beginn des Crash-Vorgangs von Interesse ist,
- für sämtliche Crash-Vorgänge die Positionen der interessierenden Ortspunkte zu den diesen zugeordneten bestimmten Zeitpunkten ermittelt werden,
- die räumliche Streuung der Positionen der interessierenden Ortspunkte zu den bestimmten Zeitpunkten ermittelt wird,
- anhand eines Vergleichs der räumlichen Streuung der Positionen eines ersten der interessierenden Ortspunkte zu dem diesem zugeordneten Zeitpunkt mit der räumlichen Streuung der Positionen mindestens eines zweiten der interessierenden Ortspunkte zu dem diesem zugeordneten Zeitpunkt analysiert wird, ob die Streuung der Positionen des ersten Ortspunktes mit derjenigen der Positionen des zweiten Ortspunktes korreliert.

Das erfindungsgemäße Verfahren setzt auf die Ergebnisse mehrerer simulierter oder real durchgeführter Crash-Vorgänge auf. In US-A-6 035 278 werden simulierte Crash-Vorgänge offenbart. An den Modellen, anhand derer die Crash-Vorgänge durchgeführt bzw. simuliert wurden, werden interessierende Ortspunkte definiert. Von Interesse ist nun die Position dieser Ortspunkte zu bestimmten Zeitpunkten nach dem Beginn des Crash-Vorgangs, also nach dem Aufschlag. Es zeigt sich, dass die Positionen dieser interessierenden Ortspunkte nach jedem Crash-Vorgang unterschiedlich sind.
An dieser Stelle beginnt das eigentliche erfindungsgemäße Analyseverfahren, indem zunächst die räumliche Streuung der Positionen der interessierenden Ortspunkte zu den jeweils dazugehörigen bestimmten Zeitpunkten ermittelt wird. Anhand eines Vergleichs der räumlichen Streuung der Positionen eines ersten der interessierenden Ortspunkte, zu dem diesem zugeordneten Zeitpunkt mit der räumlichen Streuung der Positionen mindestens eines zweiten der interessierenden Ortspunkte zu dem diesem zugeordneten Zeitpunkt wird dann analysiert, ob die Streuung der Positionen des ersten Ortspunktes mit derjenigen der Positionen des zweiten Ortspunktes korreliert.
Zweckmäßigerweise erfolgt die Korrelationsanalyse der räumlichen Streuung der Positionen zweier zu vergleichender Ortspunkte anhand von Ähnlichkeitsbetrachtungen. So kann beispielsweise die Ähnlichkeit der räumlichen Verteilung der Positionen der interessierenden Ortspunkte geordnet nach den Crash-Vorgängen erfolgen (kombinatorische Verfahren). Alternativ dazu ist es möglich, mit Hilfe von numerischen Verfahren Ähnlichkeitsuntersuchungen anzustellen. Hierbei werden beispielsweise die Abstände der Positionen der interessierenden Ortspunkte für unterschiedliche Ortspunkte miteinander verglichen. Schließlich lassen sich bei den Ähnlichkeitsuntersuchungen die im Stand der Technik bekannten Mustererkennungsverfahren ebenso anwenden.

Nutzen der Erfindung

Die Erfindung erlaubt es nun, Ursache und Wirkung von Instabilitäten zu unterschieden. Die beobachtete Instabilität kann auf die verursachende Stelle zurückgeführt werden. Damit hat der Entwicklungsingenieur den richtigen Ansatzpunkt für die Veränderung des Produkts zur Vermeidung der Instabilität an der eigentlich wichtigen Stelle.

Einsatzbereich

Die Methode lässt sich sowohl für physikalische Experimente als auch im Bereich numerischer Simulation einsetzen.

Als Anwendungsfelder kommen neben Crashuntersuchungen alle Prozesse in Frage, in denen Material in seiner äußeren Gestalt durch den Produktionsprozess oder ein Experiment zur Bestimmung von Produkteigenschaften verändert wird.

Die notwendigen Daten für die Analyse können im Falle numerischer Simulation für alle Ortspunkte und Zeitpunkte bereitgestellt werden. Im Fall physikalischer Experimente können Ortspunkte auf dem Modell markiert, der Vorgang mit High Speed Kameras aus verschiedenen Winkeln aufgenommen und anschließend die Position der Ortspunkte in Raum und Zeit durch vergleichende Bilderkennungsverfahren gewonnen werden.

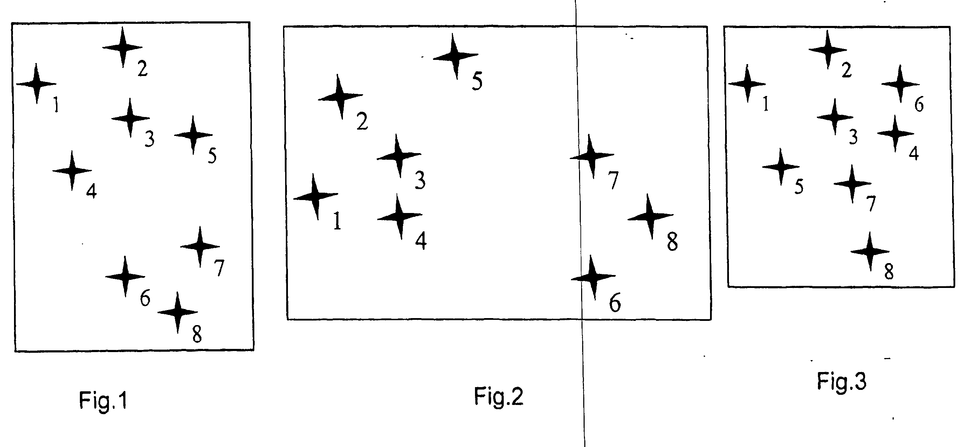

Die Erfindung wird nachfolgend anhand eines Ausführungsbeispiels unter Bezugnahme auf die Zeichnung näher erläutert. In den Fign. 1 bis 3 der Zeichnung sind dabei die räumlichen Streuungen der Positionen dreier interessierender Ortspunkte zu drei verschiedenen Zeitpunkten dargestellt. Die Ziffern geben die laufende Nummer der Crash-Versuche an, bei denen sich die unterschiedlichen Positionen der interessierenden Ortspunkte eingestellt haben.

Führt man eine Anzahl von Experimenten durch, so lassen sich die Positionen für jeden betrachteten Punkt und jeden betrachteten Zeitpunkt in einer Streuwolke zusammenfassen. Stimmen jetzt die Streuwolken W zweier Punkte $P1$ und $P2$ zu den jeweiligen Zeitpunkt $T1$ und $T2$ überein oder sind sehr ähnlich, so ist die Streuung dieser beiden Punkte nicht unabhängig voneinander. Das heißt, dass die Streuung an diesen beiden Punkten die gleiche Ursache hat.

Fign. 1 bis 3 zeigen 2D Darstellungen von Streuwolken eines Modells für drei verschiedene Punkte $p1$, $p2$, $p3$ zu drei verschiedenen Zeitpunkten $t1$, $t2$, $t3$. Bei dem hier betrachteten Beispiel handelt es sich um die Untersuchung von Fahrzeug-Crashs, wobei der Punkt $p1$ beispielsweise am vorderen Ende eines der beiden den Motor tragenden Längsträgern, der Punkt $p2$ an der die Fahrgastzelle zum Motorraum hin trennenden Stirnwand und der Punkt $p3$ beispielsweise am oberen Ende der D-Säule liegt.

Man sieht, dass die Streuwolken der Fign. 1 und 2 ähnlich zueinander sind, da die Verteilung der Positionen der Punkte $p1$ und $p2$, geordnet nach den Crash-Versuchen, ähnlich ist. Die Abstände der Positionen der Streuwolke der Fig. 2 sind größer als die der Fig. 1; darüber hinaus ist die Positionsverteilung gemäß Fig. 2 gegenüber derjenigen gemäß Fig. 1 um etwa 90° entgegengesetzt zum Uhrzeigersinn verdreht. Demgegenüber ist zwischen der Streuwolke gemäß Fig. 3 und den anderen beiden Streuwolken kein Zusammenhang, das heißt keine Ähnlichkeit zu erkennen.

Formal lässt sich das Verfahren so beschreiben:

Ist $X(p,t,s)$ die Position des Punktes $p$ zum Zeitpunkt $t$ im Experiment $s$ und $S$ die Anzahl der Experimente, dann ist die Streuwolke $W(p,t) = [X(p,t,s), s=1...S]$. Falls $W(p1,t1)$ und $W(p2,t2)$ ähnlich sind ($W(p1,t1) \approx W(p2,t2)$), dann haben $(p1,t1)$ und $(p2,t2)$ die gleiche Ursache für die Streuung.

Um die Ähnlichkeit zweier Streuwolken zu bestimmen, lassen sich verschiedene Verfahren einsetzen. Hier werden zwei Klassen von Verfahren an Beispielen vorgestellt:

- Numerische Verfahren
  bestimmen die Abstände zwischen den Punkten der Streuwolken und berechnen darauf ein Maß für die Ähnlichkeit der Streuwolken.
- Kombinatorische Verfahren
  vergleichen Eigenschaften der Streuwolken, z. B.

    - zerfallen die Streuwolken in Gruppen und haben die beiden Streuwolken die gleichen Gruppen oder
    - liegen Punkte der gleichen Experimente in beiden Streuwolken dicht beieinander oder weit voneinander entfernt.

Der Vollständigkeit halber werden für beide Klassen konkrete Varianten genannt:

Beispiel für ein numerisches Verfahren zur Bestimmung der Ähnlichkeit zweier Streuwolken :

Ist $W(1...S)$ eine Streuwolke mit $S$ Experimenten. Dann ist die Streumatrix $M$ definiert als:

$$M_{ij}(W) = \| W(i) - W(j) \|,$$

für $1 <= i,j <= S$.

Das Äquivalenzmaß $A(W1, W2)$ zweier Streuwolken ist dann definiert als

$$A(W1,W2) = 1 - \frac{\left(\sum_{ij} | \frac{M_{ij}(W1)}{\max_{ij}(M_{ij}(W1))} - \frac{M_{ij}(W2)}{\max_{ij}(M_{ij}(W2))} |\right)^2}{S^4}$$

Werte größer als 0.8 für $A(W1,W2)$ zeigen bereits bei 10 Experimenten eine signifikante Ähnlichkeit zwischen den beiden Streumatrizen, die deutlich über dem Maß zufällig ausgewählter Matrizen liegt.

Beispiel für ein kombinatorisches Verfahren zur Bestimmung der Ähnlichkeit zweier Streuwolken:

Ist $M(W)$ die Streumatrix zu einer Streuwolke $W$, und

$$\frac{\min_{ij}(M_{ij}(W))}{\max_{ij}(M_{ij}(W))} \leq 0{,}25 \, ;$$

so weist die Streuwolke Struktur auf. Ist jetzt

Liste$(M(W))$ ist eine Liste der Einträge von $M$ mit der Eigenschaft:

$$M_{liste_i(W)}(W) \leq M_{liste_j(W)}(W)$$

genau dann, wenn $i \leq j$

Die Abhängigkeitsmatrix ist dann definiert für $(i, j) = liste_k(W1) = liste_l(W2)$ als

$$AC_{ij}(W1,W2,\varepsilon) = \begin{cases} 1 & , \text{wenn} |M_{liste_i(W1)}(W1) - M_{liste_j(W1)}(W1)|^2 < \varepsilon M_{liste_i(W1)}(W1) M_{liste_j(W1)}(W1) \\ & |M_{liste_i(W2)}(W2) - M_{liste_j(W2)}(W2)|^2 < \varepsilon M_{liste_i(W2)}(W2) M_{liste_j(W2)}(W2) \\ 0 & , \text{sonst} \end{cases}$$

and
W1 und W2 sind genau dann ähnlich, falls

$$\frac{1}{S^2} \sum_{ij} AC_{ij}(W1,W2,0.2) \geq 0.8$$

Das erfindungsgemäße Verfahren wurde vorstehend anhand des Beispiels der Analyse der Stabilität von Simulationsergebnissen des Crash-Verhaltens von Fahrzeugen beschrieben.

Dabei wurden z. B. auf dem numerischen Gitter, das das Automobil beschreibt, die Position von Ortspunkten zu jedem Zeitpunkt miteinander verglichen und statistisch analysiert.

Durch die statistische Analyse der Streuung der verschiedenen Simulationsergebnisse an Knotenpunkten und durch Vergleich von Streumustern zwischen Knotenpunkten konnten Abhängigkeiten von Streuungen aufgezeigt werden. Damit gelang es zum Beispiel nachzuweisen, dass eine Streuung in der Fahrgastzelle eine direkte Folge einer Streuung der Simulationsergebnisse auf dem Längsträger ist (eine genauere Analyse zeigte dann, dass die Streuung auf dem Längsträger durch unterschiedliches Beulverhalten dieses Trägers verursacht wurde).

**Patentansprüche**

1. Verfahren zur Analyse von Streuungen der Ergebnisse von Crash-Vorgängen, bei dem

- anhand eines Modells mehrere Crash-Vorgänge simuliert oder durchgeführt werden,
- am Modell Ortspunkte definiert werden, deren Position zu bestimmten Zeitpunkten nach dem Beginn des Crash-Vorgangs von Interesse ist,
- für sämtliche Crash-Vorgänge die Positionen der interessierenden Ortspunkte zu den diesen zugeordneten bestimmten Zeitpunkten ermittelt werden,
- die räumliche Streuung der Positionen der interessierenden Ortspunkte zu den bestimmten Zeitpunkten ermittelt wird,
- anhand eines Vergleichs der räumlichen Streuung der Positionen eines ersten der interessierenden Ortspunkte zu dem diesem zugeordneten Zeitpunkt mit der räumlichen Streuung der Positionen mindestens eines zweiten der interessierenden Ortspunkte zu dem diesem zugeordneten Zeitpunkt analysiert wird, ob die Streuung der Positionen des ersten Ortspunktes mit derjenigen der Positionen des zweiten Ortspunktes korreliert.

2. Verfahren nach Anspruch 1, **dadurch gekennzeichnet, dass** die Korrelationsanalyse anhand der Ähnlichkeit der räumlichen Verteilung der Positionen des ersten und des zweiten Ortspunktes erfolgt.

3. Verfahren nach Anspruch 2, **dadurch gekennzeichnet, dass** die Ähnlichkeit anhand eines Vergleichs von für jeden Ortspunkt erstellten Abstandsmatrizen untersucht wird, wobei jede Abstandsmatrix die Abstände der Positionen eines Ortspunktes untereinander für jeden Crash-Vorgang umfasst.

4. Verfahren nach Anspruch 2, **dadurch gekennzeichnet, dass** die Ähnlichkeitsuntersuchung erfolgt, indem die räumliche relative Anordnung der Positionen der Ortspunkte unter Zuordnung zum jeweils zugehörigen Crash-Versuch auf Ähnlichkeit untersucht wird.

5. Verfahren nach Anspruch 4, **dadurch gekennzeichnet, dass** für die Ähnlichkeitsuntersuchung 3D-Mustererkennungsverfahren angewendet werden.

**Claims**

1. Method for analyzing crash testing data dispersion, wherein

- a plurality of crash tests are simulated or executed using a model,
- (local) points are defined on the model, whose positions is of interest at determined moments after the beginning of crash test,
- for all crash tests, the positions of the points of interest at the determined moments associated thereto are detected,
- the spatial dispersion of the positions of the points of interest at the determined moments is detected,
- by comparing the spatial dispersion of the positions of a first one of the points of interest at the moment associated thereto to the spatial dispersion of the positions of a least a second one of the points of interest at the moment associated thereto, it is analyzed whether the dispersion of the positions of the first point correlates with that of the positions of the second point.

2. The method of claim 1, **characterized in that** the correlation analysis is performed on the basis of the similarity of the spatial dispersion of the positions of the first and the second point.

3. The method of claim 2, **characterized in that** the similarity is examined on the basis of a comparison of distance matrixes established for each point, each distance matrix comprising the distances between the positions of a point for each crash test.

4. The method of claim 2, **characterized in that** the similarity is examined by examining the relative spatial arrangement of the positions of the points for similarity, the points being associated to the respective associated crash test.

5.  The method of claim 4, **characterized in that** 3D pattern recognition methods are employed in examining the similarity.


**Revendications**

1.  Procédé d'analyse des dispersions des résultats d'opérations de collision, dans lequel

    - à l'aide d'un modèle, plusieurs opérations de collision sont simulées ou exécutées,
    - des points locaux sont définis sur le modèle, dont la position à des instants définis après le début de l'opération de collision est intéressante,
    - pour toutes les opérations de collision, les positions des points locaux intéressants sont déterminées aux instants définis qui leur sont affectés,
    - la dispersion spatiale des positions des points locaux intéressants est déterminée aux instants définis,
    - à l'aide d'une comparaison de la dispersion spatiale des positions d'un premier des points locaux intéressants à un instant qui lui est affecté avec la dispersion spatiale des positions d'au moins un deuxième point des points locaux intéressants à l'instant qui lui est affecté, il est analysé si la dispersion des positions du premier point local est en corrélation avec celle des positions du deuxième point local.

2.  Procédé selon la revendication 1, **caractérisé en ce que** l'analyse de corrélation est effectuée à l'aide de la similitude de la distribution spatiale des positions du premier et du deuxième point local.

3.  Procédé selon la revendication 2, **caractérisé en ce que** la similitude est examinée au moyen d'une comparaison de matrices d'espacement créées pour chaque point local, chaque matrice d'espacement comprenant les espacements des positions d'un point local entre elles pour chaque opération de collision.

4.  Procédé selon la revendication 2, **caractérisé en ce que** l'examen de la similitude est effectué **en ce que** la disposition relative spatiale des positions des points locaux est examinée quant à sa similitude, avec une affectation à l'essai de collision respectivement associé.

5.  Procédé selon la revendication 4, **caractérisé en ce que** des procédés de reconnaissance de motifs en trois dimensions sont appliqués pour l'examen de la similitude.

Fig.1

Fig.2

Fig.3

EP 1 338 883 B1